# EUROPEAN PATENT APPLICATION

(11) **EP 1 688 472 A1**
(43) Date of publication of application: **09.08.2006**
(21) Application number: 03819062.5
(22) Date of filing: 26.11.2003
(51) Int. Cl.: C09K 5/00

(54) **COOLING FLUID COMPOSITION**

(71) Applicant: Shishiai-Kabushikigaisha, Seki-shi, Gifu 501-3923 (JP)
(72) Inventor: EGAWA, Hiroshi, c/o SHISHIAI-KABUSHIKIGAISHA, Seki-shi, Gifu 501-3923 (JP); KAGA, Nobuyuki, c/o SHISHIAI-KABUSHIKIGAISHA, Seki-shi, Gifu 501-3923 (JP)
(74) Representative: Ratcliffe, Susan Margaret
(86) International application number: PCT/JP2003/015115
(87) International publication number: WO 2005/052086

(57) **Abstract**

The invention relates to a coolant composition which is excellent in hard water stability and has excellent corrosion preventing properties for aluminum and aluminum alloys at high temperatures, and the coolant composition has glycol as a main ingredient and is **characterized by** comprising (a) 0.01 - 5 % by weight of phosphate; (b) 0.0001 - 0.1 % by weight of strontium compound; and (c) 0.01 - 0.5 % by weight of at least one ingredient selected from the group consisting of polymers and copolymers of C₄-C₆ unsaturated monoethylene dicarboxylic acid or their salts, polymers and copolymers of C₄-C₆ unsaturated monoethylene monocarboxylic acid or their salts, and copolymers of the above described C₄-C₆ unsaturated monoethylene dicarboxylic acid or their salts and C₄-C₆ unsaturated monoethylene monocarboxylic acid or their salts.

## Description

### Technical Field

The present invention relates to a coolant composition which is used as a coolant mainly for internal combustion engines. In particular, the invention relates to a coolant composition which is excellent in hard water stability and has excellent corrosion preventing properties for aluminum and aluminum alloys at high temperatures.

### Background Art

Metals such as aluminum, aluminum alloys, cast iron, steel, brass, solder and copper are used in cooling systems for internal combustion engines. Particularly in recent years, a large amount of aluminum or aluminum alloys have been used for parts in cooling systems, for the purpose of reducing the weight of vehicle.

These metals are corroded through contact with water or air. In order to prevent this, coolant compositions which are applied to cooling systems of internal combustion engines, include a metal corrosion inhibitor, such as phosphate, amine salt, borate, nitrite, silicate or organic acids. In particular, phosphate has excellent corrosion preventing performance for aluminum and aluminum alloys, and therefore, is used in many coolant compositions.

However, phosphate reacts with hard water components and creates precipitate, and therefore, when diluted with hard water, a large amount of precipitate is created. Creation of precipitate reduces the corrosion preventing performance of the coolant, and in addition, the created precipitate settles along the circulation path of the cooling system, and thus, there is a risk that a state where the cooling system is clogged may be caused.

Meanwhile, borate tends to corrode aluminum and aluminum alloy, and silicate is inferior in stability in liquids and tends to gell easily, that is, easily separates in the case where the temperature or pH changes, or when another salt coexists, and thereby, a problem arises, such that the corrosion preventing performance is reduced.

As for amine salt and nitrite, there is a possibility that nitrosamine, which is hazardous for human, may be generated when these coexist in the coolant.

As described above, substances which are known as metal corrosion inhibitors that are effective for preventing corrosion of aluminum or aluminum alloys all have various problems when used, and therefore, development of a corrosion inhibitor exhibiting excellent corrosion preventing properties for aluminum and aluminum alloys has been desired.

As a corrosion inhibitor solving the above described problems, 2-phosphonobutane-1, 2, 4-tricarboxylic acid and the water soluble salt thereof have been proposed. This corrosion inhibitor exhibits excellent anti-corrosion against contact between different kinds of metals, in particular, contact corrosion between aluminum alloys, cast iron and solder and other kinds of metal, and furthermore, has excellent anti-corrosion performance against corrosion of heat transfer surfaces of aluminum. In addition, this corrosion inhibitor has only a small risk of causing eutrophication in rivers and is low in toxicity, and thus, is a corrosion inhibitor causing little pollution.

The present applicant has proposed a coolant composition using 2-phosphonobutane-1, 2, 4-tricarboxylic acid having such excellent performance. This coolant composition is characterized by including phosphate, nitrate, benzoate and triazole, together with 2-phosphonobutane-1, 2, 4-tricarboxylic acid or the water soluble salt thereof (see Japanese Unexamined Patent Publication H7 (1995)-173651).

However, there is a problem with this coolant composition, such that the amount of corrosion is high in the testing of corrosion properties of heat transfer surfaces of aluminum in a range of high temperatures exceeding 150 °C.

### Disclosure of the Invention

The present invention is made in view of the above described situation, and an object thereof is to provide a coolant composition which is excellent in hard water stability and has excellent corrosion preventing properties for aluminum and aluminum alloys at high temperatures.

In order to achieve the above described object, according to the gist of the present invention, a coolant composition having glycol as a main ingredient, characterized by comprising: (a) 0.01 - 5 % by weight of phosphate; (b) 0.0001 - 0.1 % by weight of a strontium compound; and (c) 0.01 - 0.5 % by weight of at least one ingredient selected from the group consisting of polymers and copolymers of C₄-C₆ unsaturated monoethylene dicarboxylic acid or their salts (hereinafter referred to as monoethylene dicarboxylic acids), polymers and copolymers of C₄-C₆ unsaturated monoethylene monocarboxylic acid or their salts (hereinafter referred to as monoethylene monocarboxylic acids), and copolymers of the said C₄-C₆ unsaturated monoethylene dicarboxylic acid or their salts and C₄-C₆ unsaturated monoethylene monocarboxylic acid or their parts (hereinafter referred to as polycarboxylic acids and the like) is provided.

As the glycol which is a main ingredient of the coolant composition (hereinafter simply referred to as composition) according to the present invention, ethylene glycol, propylene glycol, 1, 3-butylene glycol, hexylene glycol, diethylene glycol, glycerine and the like can be cited, and from among these, ethylene glycol and propylene glycol are desirable, from the point of view of chemical stability, ease of handling, price, availability and the like.

A composition of the present invention comprises three ingredients (a) to (c) in the above described main ingredient, and these three ingredients (a) to (c) provide effects of excellent hard water stability and excellent corrosion preventing properties for aluminum and aluminum alloys at high temperatures.

As phosphate which is ingredient (a), orthophosphate, pyrophosphate, trimetaphosphate,or tetrametaphosphate may be used singly or in combination to effectively inhibit corrosion for aluminum and aluminum alloys. Phosphate is included in the range from 0.01 - 5 % by weight.

As strontium compound, which is ingredient (b), strontium oxide, strontium hydroxide, strontium chloride, strontium fluoride, strontium iodide, strontium sulfate, strontium nitrate, strontium titanate, strontium borate, strontium tungstate, strontium phosphate, strontium dihydrogen phosphate, strontium formate, strontium acetate, strontium propionate, strontium butyrate, strontium valerate, strontium laurate, strontium stearate, strontium oleate, strontium glutamate, strontium lactate, strontium succinate, strontium malate, strontium tartrate, strontium maleate, strontium citrate, strontium oxalate, strontium malonate, strontium sebacate, strontium benzoate, strontium phthalate, strontium salicylate and strontium mandelate can be cited as examples, and from among these, strontium nitrate, strontium sulfate and strontium phosphate are particularly desirable.

The above described ingredient (a) coexists with this strontium compound, and thereby, corrosion preventing performance for aluminum and aluminum alloys at high temperatures is gained. The above described strontium compound is included with a ratio of 0.0001 - 0.1% by weight. In the case where the content of the strontium compound is lower than 0.0001 % by weight, sufficient effects of "corrosion prevention for aluminum and aluminum alloys at high temperatures" cannot be expected, while in the case where the content exceeds 0.1 % by weight, no extra effects are gained for the exceeding amount, and use of the compound is uneconomical.

As the monoethylene dicarboxylic acid from among the polycarboxylic acids and the like which is ingredient (c), may be maleic acid, fumaric acid, itaconic acid, citraconic acid, mesaconic acid, as well as their alkali metal salts, ammonium salts and the like, and as the monoethylene monocarboxylic acid, acrylic acid, methacrylic acid, ethacrylic acid, vinyl acetic acid and their alkali metal salts, ammonium salts and the like of these can be cited.

Polymaleic acid, polyacrylic acid and copolymers of maleic acid and acrylic acid can be cited, as preferable examples of polymer and copolymer of monoethylene dicarboxylic acid, polymer and copolymer of monoethylene monocarboxylic acid and copolymer of monoethylene dicarboxylic acid and monoethylene monocarboxylic acid.

These polycarboxylic acids and the like have a function of effectively suppressing the creation of precipitate resulting from reaction between phosphate and a hard water component in the coolant, and thus, is excellent in stability when diluted with a hard water. In particular, polymaleic acid or their sodium salt, potassium salt or ammonium salt is excellent in stability when diluted with a hard water.

The molecular weight of the above described polymer or copolymer from among polycarboxylic acids and the like is preferably 1000 to 20000. In the case where the molecular weight is lower than 1000, sufficient hard water stability cannot be gained, while in the case where the molecular weight exceeds 20000, it is difficult to dissolve polymer or copolymer into the composition. In addition, copolymer is a random polymer or block polymer.

Polycarboxylic acid and the like are included in the range from 0.01 - 0.5 % by weight, preferably in the range from 0.05 - 0.3 % by weight. In the case where the content of polycarboxylic acid and the like is lower than 0.01 % by weight, precipitate creation suppressing performance cannot be sufficiently gained, while in the case where the content exceeds 0.5 % by weight, no extra effects are gained for the exceeding amount, and use of the polycarboxylic acid is uneconomical.

It is desirable for the composition of the present invention may exclude silicate or borate. This is because borates tends to corrode aluminum and aluminum alloys while silicate is inferior in stability in coolant, and tend to gel easily, that is, easily separates when the temperature or pH changes or when another salt coexists, and as a result, a problem arises, such that the corrosion preventing performance is lowered.

Furthermore, the composition of the present invention may exclude molybdate. In this case, there is the merit that a negative effect, such that oxidation and deterioration of glycol are accelerated by molybdate, can be prevented.

In addition, a composition of the present invention may additionally include at least one carboxylic acids or its salt having an excellent corrosion preventing property against metals, particularly iron and aluminum, and their salts. Such carboxylic acids may be aliphatic monocarboxylic acids such as acrylic acid, butanoic acid, pentanoic acid, hexanoic acid, heptanoic acid, octanoic acid, 2-ethylhexanoic acid, nonanoic acid, decanoic acid, undecanoic acid and dodecanoic acid; aliphatic dicarboxylic acids such as oxalic acid, malonic acid, succinic acid, glutaric acid, adipic acid, piperic acid, sberic acid, azelaic acid, sebacic acid, undecanedioic acid, dodecanedioic acid, brassylic acid and taptic acid; and aromatic monocarboxylic acids such as benzoic acid, p-toluic acid, p-ethylbenzoic acid, p-propylbenzoic acid, p-isopropylbenzoic acid and p-tert-butylbenzoic acid. Their salts may be alkali metal salts, amine salts and ammonium salts. It is desirable that carboxylic acids or their salts are blended in an amount of about 0.1 - 10 % by weight.

In addition, a composition of the present invention can adopt such a form as to further include nitrate having excellent corrosion preventing properties for cast aluminum. Sodium nitrate, potassium nitrate and the like can be cited as concrete examples of nitrate. It is desirable for the content of nitrate to be blended in an amount of about 0.01 - 1.0 % by weight.

In addition, a composition of the present invention can adopt such a form as to further include triazole or thiazole having excellent corrosion preventing properties for metals, particularly copper. Benzotriazole, tolyltriazole, 4-phenyl-1, 2, 3-triazole, 2-naphtotriazole, 4-nitrobenzotriazole and the like can be cited as examples of triazole, and benzotriazole and mercaptobenzothiazole can be cited as thiazole. It is desirable for the content of triazole to be blended in an amount of about 0.05 - 1.0 % by weight, and it is desirable for the content of thiazole to be blended in an amount of about 0.01 - 1.0 % by weight.

Here, the composition of the present invention may include antifoaming agent, coloring agent or the like in addition to the above described components.

### Effects of the Invention

A composition of the present invention comprises (a) 0.01 - 5 % by weight of phosphate; (b) 0.0001 - 0.1 % by weight of strontium compound; and (c) 0.01 - 0.5 % by weight of polycarboxylic acid and the like, and therefore, effects of excellent hard water stability and excellent corrosion preventing properties for aluminum and aluminum alloys at high temperatures, for example, exceeding 150 °C, can be gained.

### Best Mode for Carrying Out the Invention

In the following, the composition of the present invention is described in further detail. The following Table 1 respectively shows preferred embodiments 1 and 2, as an example which does not include ingredient (b) (Comparative Example 1), an example which includes neither ingredient (b) nor (c) (Comparative Example 2) and an example which does not include ingredient (c) (Comparative Example 3) for comparison.

**Table 1**

| Item | Embodiment 1 | Embodiment 2 | Comparative Example 1 | Comparative Example 2 | Comparative Example 3 |
|---|---|---|---|---|---|
| Phosphoric acid | 0.3 | 0.3 | 0.3 | 0.3 | 0.3 |
| Strontium nitrate | 0.01 | 0.01 | - | - | 0.01 |
| Polymaleic acid | 0.01 | 0.01 | 0.7 | - | - |
| P-tert-butyl benzoic acid | 2.0 | - | 2.0 | 2.0 | 2.0 |
| Sodium benzoate | 3.0 | 3.0 | 3.0 | 3.0 | 3.0 |
| Sebacic acid | - | 2.0 | - | - | - |
| Sodium nitrate | 0.3 | 0.3 | 0.3 | 0.3 | 0.3 |
| Tolyltriazole | 0.5 | 0.5 | 0.5 | 0.5 | 0.5 |
| 2-mercaptobenzothiazole soda | 0.4 | 0.4 | 0.4 | 0.4 | 0.4 |
| Potassium hydroxide | 0.88 | 1.38 | 1.17 | 0.87 | 0.87 |
| Water | 4 | 4 | 4 | 4 | 4 |
| Ethylene glycol | Rest | Rest | Rest | Rest | Rest |

| | | | | | |
|---|---|---|---|---|---|
| pH value (30 %) in all of the examples in Table 1 is 7.7 | | | | | |

High temperature metal corrosion test was performed on the respective samples of the above described Embodiments 1 and 2, as well as Comparative Examples 1 to 3, and a change of mass (mg/cm²) was confirmed in each metal, and whether or not there was abnormality in the appearance was confirmed. The results are shown in Table 2. Here, metal corrosion test was performed on the basis of the standard of metal corrosion property of JIS K 2234, and as the metals which to be subjected to this test, respective test pieces of cast aluminum, cast iron, steel, brass, solder and copper were used. In addition, test was carried out under conditions of 100 °C for 1000 hours with no ventilation in a pressurized air-tight container.

**Table 2**

| Item | | Embodiment 1 | Embodiment 2 | Comparative Example 1 | Comparative Example 2 | Comparative Example 3 |
|---|---|---|---|---|---|---|
| Change of mass mg/cm³ | Cast aluminum | -0.05 | +0.02 | -0.08 | -0.02 | +0.03 |
| | Cast iron | -0.03 | +0.03 | -0.01 | -0.06 | -0.01 |
| | Steel | +0.01 | 0.00 | -0.04 | -0.04 | +0.03 |
| | Brass | -0.02 | -0.06 | -0.10 | -0.06 | -0.04 |
| | Solder | -0.05 | -0.7 | -1.32 | -0.06 | -0.08 |
| | Copper | 0.00 | -0.01 | -0.05 | -0.01 | -0.03 |
| Appearance of test piece | | No abnormality | No abnormality | No abnormality | No abnormality | No abnormality |

It can be confirmed from Table 2 that all of the samples have excellent corrosion preventing properties for metals, particularly aluminum and change little in appearance.

Next, high temperature cast aluminum heat transfer surface corrosion test was performed on the respective samples of the above described Embodiments 1 and 2, as well as Comparative Examples 1 to 3, and the change of mass (mg/cm²) was measured, and whether or not there was abnormality in the appearance was confirmed. The results are shown in Table 3. Here, high temperature cast aluminum heat transfer surface corrosion test was performed in compliance with the standard of corrosion property of cast aluminum at heat-transfer corrosion test of JIS K 2234. The test temperature was 160 ° C, and the heat-resistant glass cell was replaced by a cell made of stainless steel.

**Table 3**

| Item | Embodiment 1 | Embodiment 2 | Comparative Example 1 | Comparative Example 2 | Comparative Example 3 |
|---|---|---|---|---|---|
| Change of mass mg/cm² | -0.6 | -0.2 | -22.8 | -15.4 | -0.7 |
| Appearance of test piece | No abnormality | No abnormality | General corrosion | General corrosion | No abnormality |

It can be confirmed from Table 3 that the samples of comparative examples 1 and 2 had a large change of mass, as much as -22.8 mg/cm² and -15.4 mg/cm², respectively, and general corrosion was observed on the appearance. In contrast to this, the samples of Embodiments 1, 2 and Comparative Example 3, had an extremely small amount of corrosion, as little as -0.6 mg/cm², -0.2 mg/cm² and -0.7 mg/cm², respectively, and no abnormality was observed on the appearance, and thus, it was confirmed that the samples had excellent corrosion preventing properties for the cast aluminum heat transfer surface at high temperatures.

Next, test for hard water stability was performed on Embodiments 1, 2 and Comparative Examples 1 to 3. As described above, phosphate reacts with a hard water component so as to create precipitate, and therefore, a large amount of precipitate is created when diluted with a hard water. Creation of precipitate reduces the corrosion preventing performance of the coolant, and in addition, the created precipitate settles along the circulation path in the cooling system and thus, there is a risk that a state where the cooling system is clogged may be caused. The degree of performance in suppressing reaction with a hard water component (hard water stability) was confirmed in the present test, and synthetic hard water where 48 mg of sodium sulfate, 165 mg of sodium chloride, 138 mg of sodium hydrogen carbonate and 275 mg of calcium chloride were dissolved in 1 l distilled water was used, and the respective samples were diluted with this synthetic hard water, so as to have a concentration of 50%, and existence of abnormality (precipitate) in the test solution after 24 hours at 88 °C was confirmed. The results are shown in Table 4.

**Table 4**

| Item | Embodiment 1 | Embodiment 2 | Comparative Example 1 | Comparative Example 2 | Comparative Example 3 |
|---|---|---|---|---|---|
| Appearance of solution after test | No abnormality | No abnormality | No abnormality | Precipitate created | Precipitate created |

As is clear from Table 4, creation of precipitate was observed in Comparative Examples 2 and 3, while no precipitate was created in Embodiments 1, 2 and Comparative Example 1, which include polymaleic acid, and thus, it was confirmed that these had excellent hard water stability.

## Claims

1. A coolant composition comprising a glycol as a main ingredient,
(a) 0.01 - 5 % by weight of phosphate;
(b) 0.0001 - 0.1 % by weight of strontium compound; and
(c) 0.01 - 0.5 % by weight of at least one ingredient selected from the group consisting of polymers and copolymers of C₄-C₆ unsaturated monoethylene dicarboxylic acid or their salts, polymers and copolymers of C₄-C₆ unsaturated monoethylene monocarboxylic acid or their salts, and copolymers of the said C₄-C₆ unsaturated monoethylene dicarboxylic acid or their salts and C₄-C₆ unsaturated monoethylene monocarboxylic acid or their salts.

2. The coolant composition of Claim 1, wherein said unsaturated monoethylene dicarboxylic acid is maleic acid or its alkali metal salt or ammonium salt.

3. The coolant composition of Claim 1, further comprising 0.1 - 10 % by weight of at least one ingredient selected from the group consisting of carboxylic acid or their salts.

4. The coolant composition of Claim 2, further comprising 0.1 - 10 % by weight of at least one ingredient selected from the group consisting of carboxylic acid or their salts.

5. The coolant composition of Claim 1, further comprising 0.01 - 1.0 % by weight of nitrate.

6. The coolant composition of Claim 2, further comprising 0.01 - 1.0 % by weight of nitrate.

7. The coolant composition of Claim 3, further comprising 0.01 - 1.0 % by weight of nitrate.

8. The coolant composition of Claim 4, further comprising 0.01 - 1.0 % by weight of nitrate.

9. The coolant composition of Claim 1, further comprising about 0.05 - 1.0 % by weight of triazole or about 0.01 - 1.0 % by weight of thiazole.

10. The coolant composition of Claim 2, further comprising about 0.05 - 1.0 % by weight of triazole or about 0.01 - 1.0 % by weight of thiazole.

11. The coolant composition of Claim 3, further comprising about 0.05 - 1.0 % by weight of triazole or about 0.01 - 1.0 % by weight of thiazole.

12. The coolant composition of Claim 4, further comprising about 0.05 - 1.0 % by weight of triazole or about 0.01 - 1.0 % by weight of thiazole.

13. The coolant composition of Claim 5, further comprising about 0.05 - 1.0 % by weight of triazole or about 0.01 - 1.0 % by weight of thiazole.

14. The coolant composition of Claim 6, further comprising about 0.05 - 1.0 % by weight of triazole or about 0.01 - 1.0 % by weight of thiazole.

15. The coolant composition of Claim 7, further comprising about 0.05 - 1.0 % by weight of triazole or about 0.01 - 1.0 % by weight of thiazole.

16. The coolant composition of Claim 8, further comprising about 0.05 - 1.0 % by weight of triazole or about 0.01 - 1.0 % by weight of thiazole.
